# EUROPEAN PATENT APPLICATION

(11) **EP 4 782 423 A1**
(43) Date of publication of application: **29.07.2026**
(21) Application number: 26153498.6
(22) Date of filing: 22.01.2026
(51) Int. Cl.: C04B 35/573, C04B 35/628, C04B 35/80

(54) **REACTION CONTROLLED MELT-INFILTRATED FABRICATION OF CERAMIC MATRIX COMPOSITES**

(30) Priority: 23.01.2025 US 202519034940
(71) Applicant: RTX Corporation, Farmington, CT 06032 (US)
(72) Inventor: MASTROBATTISTO, Daniel, Aliso Viejo, 92656 (US); SRINIVASAN, Gajawalli V., South Windsor, 06074 (US); HEJAZI, Vahid, Carlsbad, 92009 (US)
(74) Representative: Dehns

(57) **Abstract**

A process for fabricating a melt-infiltrated ceramic matrix composite comprises fabricating a ceramic fiber preform comprising at least one fiber, fiber tow, or both; depositing at least one structural support material coating on the fiber, fiber tow, or both to form a partially densified ceramic matrix composite comprising at least one pore, porous network or both; depositing at least one fiber protection material coating on the fiber, fiber tow, or both; infiltrating a slurry composition comprising at least one sacrificial particle into the pore, porous network, or both; depositing at least one reaction control material coating on the fiber, the fiber tow, or the fiber, fiber tow and sacrificial particle of the partially densified ceramic matrix composite; melt-infiltrating at least one molten infiltrant into the partially densified ceramic matrix composite to form a melt-infiltrated ceramic matrix composite.

## Description

### FIELD OF THE INVENTION

The subject matter disclosed herein relates to fabricating ceramic matrix composites and, in particular, to fabricating ceramic matrix composites using a reaction controlled melt-infiltration technique.

### BACKGROUND OF THE INVENTION

When melt-infiltrating a partially densified ceramic matrix composite, a liquified molten infiltrant containing, e.g., silicon, traverses throughout the composite. The silicon of the melt infiltrant reacts with material deposited within the composite, e.g., carbon source materials like diamond, and forms reaction products, such as silicon carbide and/or silicides. However, the aforementioned reactions consume the silicon present and alters the molten infiltrants chemical composition. For example, as the silicon of a silicon-based molten infiltrant reacts with carbon and becomes consumed, the molten infiltrant becomes depleted in silicon and richer in its alloying element, e.g., hafnium. Now, when the molten infiltrant, such as Si-Hf, initially begins as, e.g., a eutectic composition, the melting point of Si-Hf will increase as silicon is depleted. Eventually, as more silicon is depleted, the melting point will increase to a temperature above the melt infiltration temperature and the alloy solidifies, and infiltration stops. As a result, porous regions will form within the ceramic matrix composite at locations furthest from the initial infiltration site such that only a partially melt-infiltrated ceramic matrix composite is fabricated.

Besides the partial melt-infiltration of the ceramic matrix composite, both the resultant alloy composition and reactant phase distribution within the melt-infiltrated areas exhibit a non-uniform distribution of material properties. Non-uniform distribution of material properties may include solidification shrinkage/expansion, thermal expansion coefficient (CTE), thermal conductivity and elastic modulus. Solidification stress, such as, non-uniform solidification shrinkage/expansion, and thermal expansion coefficient (CTE) mis-match stress occur during cooling and thermal cycling, which causes micro-cracking. In addition, non-uniform thermal conductivity and elastic modulus increase may increase the impact of solidification stress and CTE mismatch stress. These resultant microcracks can detrimentally impact various properties of a partially melt-infiltrated ceramic matrix composite. Those various properties include, for example, interlaminar shear, interlaminar tension, stress rupture life, and tensile proportional limit. The extent of the aforementioned phenomena are affected by the following: part size, part complexity, sacrificial materials, sacrificial material amount, alloy selection and infiltration temperature.

Consequently, there is a need for a melt-infiltration technique whose rate of reaction allows for the complete infiltration of a molten infiltrant into a partially densified ceramic matrix composite without experiencing the drawbacks discussed above.

### SUMMARY OF THE INVENTION

The present disclosure is directed, in a first aspect, to a process for fabricating a melt-infiltrated ceramic matrix composite, comprising the steps of: fabricating a ceramic fiber preform comprising at least one fiber, at least one fiber tow, or at least one fiber and fiber tow; optionally depositing at least one interface coating on the at least one fiber, the at least one fiber tow, or the at least one fiber and fiber tow; depositing at least one structural support material coating on the at least one fiber, the at least one fiber tow, or the at least one fiber and fiber tow to form a partially densified ceramic matrix composite comprising at least one pore, at least one porous network or at least one pore and porous network; depositing at least one fiber protection material coating on the at least one fiber, the at least one fiber tow, or the at least one fiber and fiber tow; infiltrating a slurry composition comprising at least one sacrificial particle into the at least one pore, the at least one porous network or both the at least one pore and the porous network; depositing at least one reaction control material coating on the at least one fiber, the at least one fiber tow, or the at least one fiber and fiber tow and at least one sacrificial particle of the partially densified ceramic matrix composite; optionally depositing at least one wetting layer coating on the at least one reaction control material coating of the partially densified ceramic matrix composite, the at least one reaction control material coating of the at least one sacrificial particle, or both the at least one reaction control material coating of the partially densified ceramic matrix composite and the at least one reaction control material coating of the at least one sacrificial particle; melt-infiltrating at least one molten infiltrant into the partially densified ceramic matrix composite to form a melt-infiltrated ceramic matrix composite; and optionally heat treating the melt-infiltrated ceramic matrix composite, wherein the at least one sacrificial particle comprises a core, the at least one reaction control material coating disposed adjacent the core, and the optional at least one wetting layer coating disposed adjacent the at least one reaction control material coating and opposite the core.

In further examples of the present disclosure, including further examples of the above, melt-infiltrating further comprises the following steps: reacting the at least one molten infiltrant with the optional at least one wetting layer coating of the at least one sacrificial particle, the optional at least one wetting layer coating of the partially densified ceramic matrix composite, or both the optional at least one wetting layer coating of the at least one sacrificial particle and the optional at least one wetting layer coating of the partially densified ceramic matrix composite; diffusing the at least one molten infiltrant through the at least one reaction control material coating and reacting with the at least one sacrificial particle; and reacting the at least one molten infiltrant with the at least one sacrificial particle until a matrix comprising a reaction formed silicon carbide and a high melting point silicide is produced.

In further examples of the present disclosure, including further examples of the above, the reaction formed silicon carbide comprises a particle having a core with an exterior surface, at least one reaction control material coating disposed adjacent the exterior surface, and a reaction formed silicon carbide coating disposed adjacent the at least one reaction control material coating and opposite the exterior surface.

In further examples of the present disclosure, including further examples of the above, the reaction control materials or the fiber protection materials or both the reaction control materials and the fiber protection materials comprise one or more of the following: carbides, carbon materials, nitrides, borides, and combinations thereof.

In further examples of the present disclosure, including further examples of the above, the carbides comprise one or more of the following: silicon carbides, boron carbides, zirconium carbides, hafnium carbides, tantalum carbides, niobium carbides, titanium carbides, molybdenum carbides, boron carbides, tungsten carbides, vanadium carbides, chromium carbides, ytterbium carbides, yttrium carbides, and combinations thereof.

In further examples of the present disclosure, including further examples of the above, the carbon materials comprise one or more of the following: pyrolytic carbon, graphite flakes, graphite particles, graphite fibers, carbon nanotubes, carbon nanofibers, diamonds, and combinations thereof.

In further examples of the present disclosure, including further examples of the above, the nitrides comprise one or more of the following: silicon nitrides, titanium nitrides, boron nitrides, zirconium nitrides, hafnium nitrides, niobium nitrides, tantalum nitrides, vanadium nitrides, ytterbium nitrides, yttrium nitrides, and combinations thereof.

In further examples of the present disclosure, including further examples of the above, the borides comprise one or more of the following: silicon borides, titanium borides, borides, zirconium borides, hafnium borides, niobium borides, tantalum borides, vanadium borides, ytterbium borides, yttrium borides, and combinations thereof.

In further examples of the present disclosure, including further examples of the above, the wetting layer coating comprises one or more of the following: carbides, carbon materials, and combinations thereof.

In further examples of the present disclosure, including further examples of the above, the carbides comprise one or more of the following: silicon carbides, boron carbides, and combinations thereof.

In further examples of the present disclosure, including further examples of the above, the carbon materials comprise one or more of the following: pyrolytic carbon, graphite flakes, graphite particles, graphite fibers, carbon nanotubes, carbon nanofibers, diamonds, and combinations thereof.

In further examples of the present disclosure, including further examples of the above, the at least one sacrificial material comprises one or more of the following materials: carbon source materials, nitride source materials, boride source materials, oxide source materials, oxide phase precursor materials, metal source materials and metalloid source materials.

In further examples of the present disclosure, including further examples of the above, depositing comprises one or more of the following techniques: slurry infiltration and chemical vapor infiltration.

In further examples of the present disclosure, including further examples of the above, the interface coating, the structural support material or both the interface coating and the structural support material comprises one or more of the following materials: carbides, carbon materials, nitrides, borides, and combinations thereof.

In further examples of the present disclosure, including further examples of the above, melt-infiltrating further comprises melt-infiltrating one or more of the following molten infiltrants: metals, metalloids, metal alloys, metalloid alloys, glasses, and combinations thereof.

In further examples of the present disclosure, including further examples of the above, the at least one molten infiltrants comprise one or more of the following: silicon, hafnium silicide, zirconium silicide, titanium silicide, tantalum silicide, iridium silicide, molybdenum silicide, tungsten silicide, boron silicide, niobium silicide, ytterbium silicide, vanadium silicide, scandium silicide, yttrium silicide, and combinations thereof.

In another aspect, which the Applicant expressly reserves the right to claim independently, the present disclosure is directed to a melt-infiltrated ceramic matrix composite fabricated according to the steps comprising: fabricating a ceramic fiber preform comprising at least one fiber, at least one fiber tow, or at least one fiber and fiber tow; optionally depositing at least one interface coating on the at least one fiber, the at least one fiber tow, or the at least one fiber and fiber tow; depositing at least one structural support material coating on the at least one fiber, the at least one fiber tow, or the at least one fiber and fiber tow to form a partially densified ceramic matrix composite comprising at least one pore, at least one porous network or at least one pore and porous network; depositing at least one fiber protection material coating on the at least one fiber, the at least one fiber tow, or the at least one fiber and fiber tow; infiltrating a slurry composition comprising at least one sacrificial particle into the at least one pore, the at least one porous network or both the at least one pore and the porous network; depositing at least one reaction control material coating on the at least one fiber, the at least one fiber tow, or the at least one fiber and fiber tow of the partially densified ceramic matrix composite; optionally depositing at least one wetting layer coating on the at least one reaction control material coating of the partially densified ceramic matrix composite, the at least one reaction control material coating of the at least one sacrificial particle, or both the at least one reaction control material coating of the partially densified ceramic matrix composite and the at least one reaction control material coating of the at least one sacrificial particle; melt-infiltrating at least one molten infiltrant into the partially densified ceramic matrix composite to form a melt-infiltrated ceramic matrix composite; and optionally heat treating the melt-infiltrated ceramic matrix composite, wherein the at least one sacrificial particle comprises a core, at least one reaction control material coating disposed adjacent the core, and the optional at least one wetting layer coating disposed adjacent the at least one reaction control material coating and opposite the core.

In further examples of the present disclosure, including further examples of the above, melt-infiltrating further comprises the following steps: reacting the at least one molten infiltrant with the optional at least one wetting layer coating of the at least one sacrificial particle, the optional at least one wetting layer coating of the partially densified ceramic matrix composite, or both the optional at least one wetting layer coating of the at least one sacrificial particle and the optional at least one wetting layer coating of the partially densified ceramic matrix composite; diffusing the at least one molten infiltrant through the at least one reaction control material coating and reacting with the at least one sacrificial particle; and reacting the at least one molten infiltrant with the at least one sacrificial particle until a matrix comprising a reaction formed silicon carbide and a high melting point silicide is produced.

In further examples of the present disclosure, including further examples of the above, wherein the reaction formed silicon carbide comprises a particle having a core, at least one reaction control material coating disposed adjacent the core, and a reaction formed silicon carbide coating disposed adjacent the at least one reaction control material coating and opposite the core.

In yet another aspect, the present disclosure is directed to a process for fabricating a melt-infiltrated ceramic matrix composite, comprising the steps of: fabricating a ceramic fiber preform comprising at least one fiber, at least one fiber tow, or at least one fiber and fiber tow; optionally depositing at least one interface coating on the at least one fiber, the at least one fiber tow, or the at least one fiber and fiber tow; depositing at least one structural support material coating on the at least one fiber, the at least one fiber tow, or the at least one fiber and fiber tow to form a partially densified ceramic matrix composite comprising at least one pore, at least one porous network or both the at least one pore and the porous network; depositing at least one fiber protection material coating on the at least one fiber, the at least one fiber tow, or the at least one fiber and fiber tow; infiltrating a slurry composition comprising at least one coated sacrificial particle into the at least one pore, the at least one porous network or the at least one pore and porous network; melt-infiltrating at least one molten infiltrant into the partially densified ceramic matrix composite to form a melt-infiltrated ceramic matrix composite; and optionally heat treating the melt-infiltrated ceramic matrix composite.

In further examples of the present disclosure, including further examples of the above, the process further comprises, prior to infiltrating the slurry composition, the steps of: providing at least one sacrificial particle; depositing at least one reaction control material coating on the at least one sacrificial particle; optionally depositing at least one wetting layer on the at least one reaction control material coating of the at least one sacrificial particle to form the at least one coated sacrificial particle; and adding the at least one coated sacrificial particle to a solvent of a slurry to form the slurry composition.

In further examples of the present disclosure, including further examples of the above, further comprising, prior to infiltrating the slurry composition, providing at least one coated sacrificial particle comprising a core, the at least one reaction control material coating disposed adjacent the core, and the optional at least one wetting layer disposed adjacent the at least one reaction control material coating and opposite the core.

### BRIEF DESCRIPTION OF FIGURES

The features of the disclosure believed to be novel and the elements characteristic of the invention are set forth with particularity in the appended claims. The figures are for illustration purposes only and are not drawn to scale. The disclosure itself, however, both as to organization and method of operation, can best be understood by reference to the description of the preferred embodiment(s) which follows, taken in conjunction with the accompanying drawings in which:
FIG. 1 is a flowchart illustrating an exemplary process for fabricating a melt-infiltrated ceramic matrix composite utilizing reaction control layers.
FIG. 2A is a flowchart illustrating an exemplary process for fabricating a coated sacrificial particle for use in step 600 of the exemplary process illustrated in FIG. 1.
FIG. 2B is a flowchart illustrating another exemplary process for fabricating a coated sacrificial particle for use in step 600 of the exemplary process illustrated in FIG. 1.
FIG. 2C is a flowchart illustrating yet another exemplary process for fabricating a coated sacrificial particle for use in step 600 of the exemplary process illustrated in FIG. 1.
FIG. 3 is a cross-sectional illustration of an exemplary slurry infiltrated partially densified ceramic matrix composite.
FIG. 4 is a cross-sectional illustration of an exemplary melt-infiltrated ceramic matrix composite.

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or would otherwise be appreciated by one of skill in the art. It is to be understood that all concentrations disclosed herein are by weight percent (wt. %.) based on a total weight of the composition unless otherwise indicated.

The present disclosure is directed to fabricating ceramic matrix composites using an exemplary reaction controlled melt-infiltration technique. Using temperature alone to limit the reaction rate and phase segregation during melt-infiltration is only partially effective to combat numerous potential drawbacks. Those drawbacks include a reduction in CMC-based part size; reduction in part geometry complexity; limited sacrificial particle material selection and quantity; limited molten infiltrant selection and alloy composition; and, limited maximum melt-infiltration temperature. In contrast, the exemplary reaction controlled melt-infiltration technique disclosed herein utilizes exemplary reaction control layers. All the aforementioned drawbacks may be avoided by using the exemplary reaction control layers disclosed herein. In addition, the exemplary reaction control layers may produce ceramic matrix composites exhibiting and possessing a homogenous distribution of matrix phases resulting in uniform material properties, such as, but not limited to, coefficient of thermal expansion, thermal conductivity, solidification volumetric change, oxidation resistance and melting point. As result, the final ceramic matrix composite may have improved mechanical properties and high temperature capabilities compared to ceramic matrix composites fabricated without the exemplary reaction control layers disclosed herein.

As used herein, a "coated preform" or "coated substrate" refers to an interface coated ceramic fiber preform or an interface coated ceramic fiber substrate. As also used herein, a "partially densified CMC" or "partially densified ceramic matrix composite" refers to a coated substrate or preform that includes a structural support material layer that facilitates rigidization of the preform to become self-supporting, also known as a rigidized coated substrate or rigidized coated preform. As also used further herein, a "ceramic matrix composite" or "CMC" refers to a matrix infiltrated into the coated substrate or coated preform or alternatively, a matrix infiltrated into the rigidized partially densified CMC.

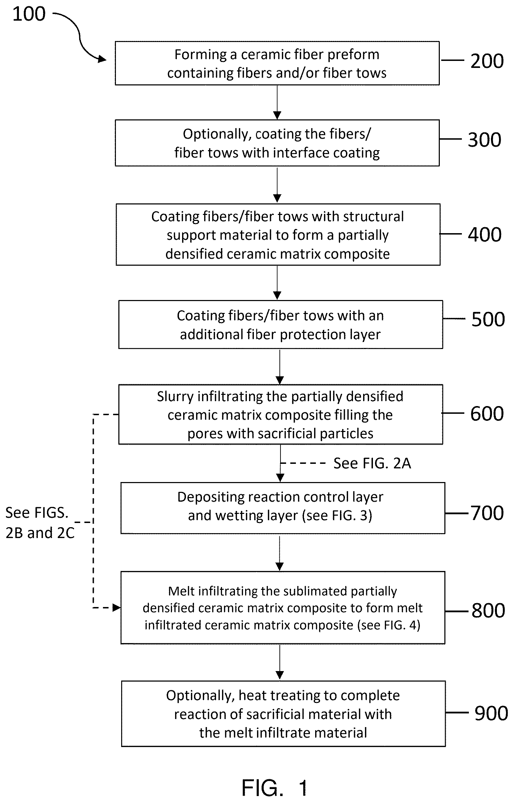

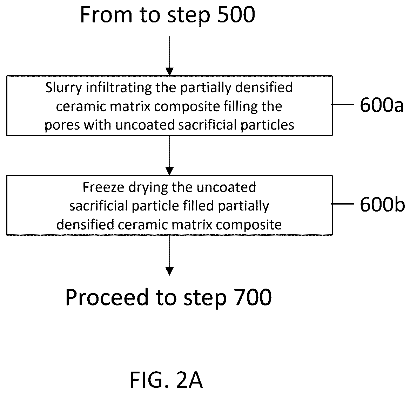

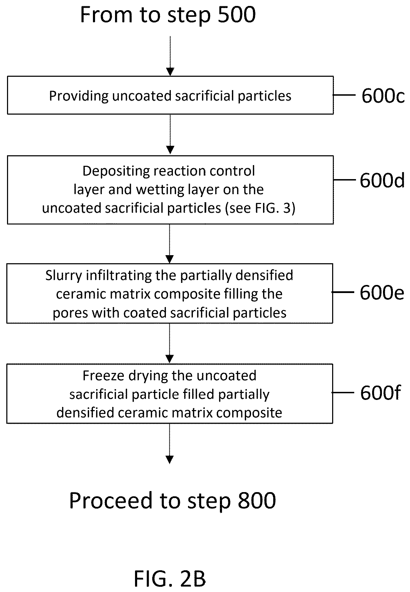

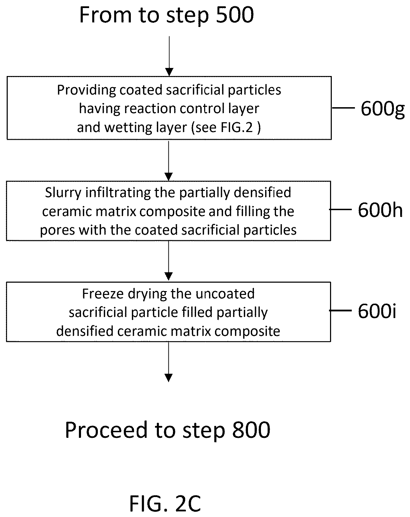

Referring now to FIG. 1, a flowchart 100 illustrating an exemplary process for fabricating a melt-infiltrated ceramic matrix composite utilizing reaction control layers is shown. At an exemplary step 200 of FIG. 1, a ceramic fiber preform may be fabricated. At least one fiber, at least one fiber tow, or at least one fiber and fiber tow may be combined to fabricate the ceramic fiber preform using any suitable technique known. Suitable fibers for use as the fibers and/or fiber tows may include, but are not limited to, silicon carbide, carbon, aluminum oxide, silicon nitride, combinations thereof, and the like. For illustrative purposes, and not drawn to scale, the resultant fiber(s), fiber tow(s) or both fiber(s) and fiber tow(s) 10 in cross-section may be shown in FIG. 2.

Next, at an exemplary step 300 of FIG. 1, an interface coating material 20 may optionally be disposed as a coating on the fiber(s), fiber tow(s), or both fiber(s) and fiber tow(s) of the ceramic fiber preform to fabricate a coated preform or coated substrate as an intermediate product. Suitable interface coating materials may include, but are not limited to, carbides such as silicon carbides, boron carbides, zirconium carbides, hafnium carbides, tantalum carbides, niobium carbides, titanium carbides, molybdenum carbides, tungsten carbides, vanadium carbides, chromium carbides, ytterbium carbides, yttrium carbides, combinations thereof, and the like; carbon materials such as pyrolytic carbons, graphite and the like; nitrides such as silicon nitrides, titanium nitrides, boron nitrides, zirconium nitrides, hafnium nitrides, niobium nitrides, tantalum nitrides, vanadium nitrides, ytterbium nitrides, yttrium nitrides, combinations thereof, and the like; borides such as silicon borides, titanium borides, zirconium borides, hafnium borides, niobium borides, tantalum borides, vanadium borides, ytterbium borides, yttrium borides, combinations thereof, and the like. The interface coating materials may be deposited using any suitable deposition technique. Suitable deposition techniques may include, but are not limited to, chemical vapor infiltration, slurry infiltration, combinations thereof, and the like.

Next, at an exemplary step 400 of FIG. 1, a structural support material 30 may be disposed as a coating on the fiber(s), fiber tow(s), or both fiber(s) and fiber tow(s) of the coated preform to fabricate a partially densified ceramic matrix composite as another intermediate product. The resultant partially densified ceramic matrix composite may comprise at least one pore, at least one porous network, or at least one pore and porous network on at least an exterior surface(s), at least a series of interconnected pores, channels, combinations thereof, and the like therein; or both the exterior surface and the interconnected pores therein. Suitable structural support materials may include, but are not limited to, carbides such as silicon carbides, boron carbides, zirconium carbides, hafnium carbides, tantalum carbides, niobium carbides, titanium carbides, molybdenum carbides, tungsten carbides, vanadium carbides, chromium carbides, ytterbium carbides, yttrium carbides, combinations thereof, and the like; carbon materials such as pyrolytic carbons, graphite and the like; nitrides such as silicon nitrides, titanium nitrides, boron nitrides, zirconium nitrides, hafnium nitrides, niobium nitrides, tantalum nitrides, vanadium nitrides, ytterbium nitrides, yttrium nitrides, combinations thereof, and the like; borides such as silicon borides, titanium borides, zirconium borides, hafnium borides, niobium borides, tantalum borides, vanadium borides, ytterbium borides, yttrium borides, combinations thereof, and the like. The structural support materials may be deposited using any suitable deposition technique. Suitable deposition techniques may include, but are not limited to, chemical vapor infiltration, slurry infiltration, combinations thereof, and the like.

Next, at an exemplary step 500 of FIG. 1, an additional fiber protection material 40 may be disposed as a coating on the fiber(s), fiber tow(s), or both fiber(s) and fiber tow(s) of the partially densified ceramic matrix composite. The fiber protection coating material may be any material capable of protecting the partially densified CMC from a molten infiltrant during a melt-infiltration step performed later in the exemplary process disclosed herein. Suitable fiber protection coating materials may include, but are not limited to, pyrolytic carbon, boron carbide, silicon nitride, silicon nitro carbide, borides, combinations thereof, and the like. Deposition of the fiber protection coating materials may take place using any technique capable of depositing the material on and within the pores, porous network or both the pores and porous network of the partially densified CMC. Suitable fiber protection coating material techniques may include, but are not limited to, chemical vapor infiltration (CVI), chemical vapor deposition (CVD), physical vapor deposition (PVD), atomic layer deposition (ALD), molecular-beam epitaxy; individually, and combinations thereof, and the like.

Referring now to FIGS. 1 and 2A-2C, a slurry containing a solvent and at least one uncoated particle (see FIGS. 1 and 2A) or at least one coated sacrificial particle (see FIGS. 2B and 2C) may be provided for infiltrating and filling the pore(s), porous network, or both the pore(s) and porous network of the partially densified ceramic matrix composite. In at least one embodiment, the slurry may include various additives including, but not limited to, binders, wetting agents, carbon sources, various particles (e.g., carbons, metals, carbides, nitrides, borides, oxides, combinations thereof, and the like), pH adjusters, dispersants, combinations thereof, and the like. Additives of any shape, e.g., particulate, flake or fiber; or size, e.g., nanometer, sub-micron, micron, combinations comprising any one of the foregoing, and the like; may be added to a slurry prior to slurry infiltration taking place. The aforementioned additives may be present in various concentrations, e.g., by weight percent, volume percent, and the like; based on the total amount of the slurry, and in various ratios with respect to each other, to optimize the efficiency of each slurry infiltration performed.

Referring now to FIGS. 2A-2C, in at least one embodiment, either at least one uncoated sacrificial particle (see FIGS. 2A and 2B) or at least one coated sacrificial particle (see FIG. 2C) may comprise a core with an exterior surface having at least one coating either initially or eventually disposed thereupon. An uncoated sacrificial particle may have at least one coating initially deposited thereupon to form a coated sacrificial particle (see FIGS. 2A and 2B) or may be supplied commercially, that is, already coated (see FIG. 2C). In at least one embodiment, the sacrificial particle may be coated earlier and added while preparing the slurry composition disclosed herein (see FIG. 2A). When coated earlier, an uncoated sacrificial particle may be coated according to the deposition techniques to be discussed herein to form the coated sacrificial particle. In at least one other embodiment, the uncoated sacrificial particle may be incorporated and uniformly distributed within the at least partially densified ceramic matrix composite (see FIG. 2B). In at least yet one other embodiment, the sacrificial particle may be supplied commercially, that is, as a coated sacrificial particle, and added while preparing the slurry composition disclosed herein (see FIG 2C).

Generally, the coating layer(s), and specifically the reaction control and wetting layers discussed below, may be applied using any number of suitable deposition techniques. Suitable deposition techniques may include, but are not limited to, vapor, plasma, solution-based deposition techniques; individually, and combinations thereof, and the like. In at least one embodiment, suitable vapor-based deposition techniques may include, but are not limited to, atomic layer deposition (ALD), physical vapor deposition (PVD), molecular beam epitaxy (MBE), chemical vapor deposition or infiltration (CVD/CVI); individually, and combinations thereof, and the like. In at least one embodiment, suitable plasma-based deposition techniques may include, but are not limited to, plasma spraying; individually, and combinations thereof, and the like. In at least one embodiment, suitable solution-based deposition techniques may include, but are not limited to slurry infiltration, slurry spraying, electrolytic or electroless plating, electrophoretic deposition, chemical precipitation; individually, and combinations thereof, and the like. In at least one additional embodiment, another suitable coating technique may include, but is not limited to, chemical or mechanical cladding; individually, and combinations thereof, and the like. In at least one additional embodiment, a fluidized bed may be utilized with, but not limited to, ALD, CVD; individually, and combinations thereof, and the like; and, other aforementioned techniques to promote coating uniformity, e.g., ability to fully coat the sacrificial particles and thickness control.

The core of the coated particle may include, but is not limited to, carbon-based materials; various carbides, including but not limited to, boron carbides, zirconium carbides, hafnium carbides, tantalum carbides, niobium carbides, titanium carbides, molybdenum carbides, tungsten carbides, vanadium carbides, chromium carbides, ytterbium carbides, yttrium carbides, combinations thereof, and the like; graphite, e.g., flake, particle or fiber forms; carbon nanotubes, carbon nanofibers, diamond particles, combinations thereof, and the like; nitrides, including but not limited to, silicon nitrides, titanium nitrides, boron nitrides, zirconium nitrides, hafnium nitrides, niobium nitrides, tantalum nitrides, vanadium nitrides, ytterbium nitrides, yttrium nitrides, combinations thereof, and the like; borides, including but not limited to, silicon borides, titanium borides, zirconium borides, hafnium borides, niobium borides, tantalum borides, vanadium borides, ytterbium borides, yttrium borides, combinations thereof, and the like; silicides including, but not limited to, hafnium silicide, zirconium silicide, titanium silicide, tantalum silicide, iridium silicide, molybdenum silicide, tungsten silicide, boron silicide, niobium silicide, ytterbium silicide, vanadium silicide, scandium silicide, yttrium silicide, combinations thereof, and the like; oxides, including but not limited to, aluminum oxides, silicon oxides, tantalum oxides, boron oxides, hafnium oxides, zirconium oxides, ytterbium oxides, yttrium oxides, combinations thereof, and the like; oxide phase precursors including, but not limited to, alkaline earth metal alumino silicates, boro-silicates (B₂O₃-SiO₂), alkaline earth metal alumino silicates, such as AEO-Al₂O₃-SiO₂, where AE = Be, Ca, Ba and Sr; rare earth alumino silicates, such as REO-Al₂O₃-SiO₂, where RE = La, Ce, Pr, Nd, Pm, Sm, Eu, Gd, Tb, Dy, Ho, Er, Tm, Yb, Lu and Y; combinations thereof, and the like; metals including, but not limited to, zirconium, hafnium, tantalum, niobium, titanium, molybdenum, tungsten, vanadium, chromium, ytterbium, yttrium, combinations thereof, and the like; metalloids including, but not limited to, silicon, boron, combinations thereof, and the like; alloys comprising any one or more of the aforementioned metal(s) and/or metalloid(s); as well as combinations thereof, and the like.

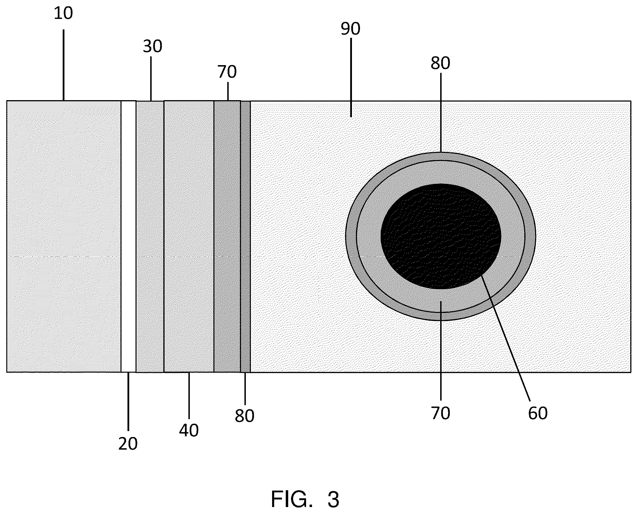

Referring now to FIG. 3, the aforementioned coating layer(s) may comprise at least one reaction control material 70 deposited as a coating adjacent the exterior surface of the core particle and at least one optional wetting layer 80 disposed as a coating adjacent the reaction control material 70 and opposite the exterior surface. The reaction control material 70 may be applied to the exterior surface of the core particle 60, the fiber protection layer 40 of the partially densified ceramic matrix composite, or both the core particle 60 and the fiber protection layer 40. The optional wetting layer 80 may be applied to the exterior surface of the core particle 60, the reaction control material layer 70 of the partially densified ceramic matrix composite or both the core particle 60 and the reaction control material layer 70. In at least one embodiment, the optional wetting layer 80 also may be disposed as an additional coating (not shown) on the fiber protection layer 40 and between the fiber protection layer 40 and reaction control material 70. The additional optional wetting layer material 80 may bond additional reaction control materials that otherwise may not be compatible with the reaction control material 70.

The reaction control layer 70 may be designed to delay the molten infiltrant material from reacting with the core of the coated particle until the molten material has completely penetrated, i.e., completely infiltrated, the partially densified ceramic matrix composite. By allowing the molten material to completely penetrate the partially densified ceramic matrix composite without reacting with the coated particle core material, the porosity and phase segregation issues described above may be avoided. After infiltration is completed, the temperature of the melt-infiltration process may be increased to allow for diffusion across the reaction control layer 70. Such diffusion may initiate a reaction between the coated particle core material and the molten infiltrant material. In at least one embodiment, the rate of diffusion, and hence the rate of reaction too, may be controlled by the material selection, layer thickness, grain structure, and grain orientation of the reaction control layer 70.

In at least one embodiment, the reaction control material coating may be fabricated using any number of the aforementioned suitable deposition techniques. In at least one embodiment, the reaction control material may include, but is not limited to, carbides, carbon materials, nitrides, borides, combinations thereof, and the like. Suitable carbides may include, but are not limited to, silicon carbides, boron carbides, zirconium carbides, hafnium carbides, tantalum carbides, niobium carbides, titanium carbides, molybdenum carbides, boron carbides, tungsten carbides, vanadium carbides, chromium carbides, ytterbium carbides, yttrium carbides, combinations thereof, and the like. Suitable carbon materials may include, but are not limited to, pyrolytic carbon, graphite flakes, graphite particles, graphite fibers, carbon nanotubes, carbon nanofibers, diamonds, combinations thereof, and the like. Suitable nitrides may include, but are not limited to, silicon nitrides, titanium nitrides, boron nitrides, zirconium nitrides, hafnium nitrides, niobium nitrides, tantalum nitrides, vanadium nitrides, ytterbium nitrides, yttrium nitrides, combinations thereof, and the like. Suitable borides may include, but are not limited to, silicon borides, titanium borides, borides, zirconium borides, hafnium borides, niobium borides, tantalum borides, vanadium borides, ytterbium borides, yttrium borides, combinations thereof, and the like.

Despite the similarities in constituents disclosed herein, the reaction control material coating 70 may be different from the fiber protection layer 40. More particularly, the reaction control material coating 70 may be engineered to have a diffusion rate sufficient to create a desired reaction rate with the core particle 60 of the coated particle. In contrast, the fiber protection layer 40 may be designed to prevent molten infiltrant materials from attacking the aforementioned fibers and/or fiber tows, interface coating, and structural support materials disclosed herein. By avoiding any reactions with the aforementioned fiber coating materials, potential detrimental reaction products and by-products that may negatively affect the mechanical properties of the resultant melt-infiltrated ceramic matrix composite may be avoided. Consequently, the fiber protection layer 40 and reaction control material coating 70 may comprise similar materials having different layer thicknesses, grain structures and/or grain orientations to facilitate the aforementioned desired properties and outcomes during use.

Next, optionally, the aforementioned wetting layer 80 also may be disposed as a coating on the reaction control material layer 70 of coated particle or of the partially densified ceramic matrix composite or of both the coated particle and partially densified ceramic matrix composite, or even as an additional coating (not shown) on the fiber protection layer 40 and between the fiber protection layer 40 and reaction control material 70, at exemplary step 700 of FIG. 1 (see also FIG. 3). In at least one embodiment, the wetting layer 80 may be fabricated using any number of the aforementioned suitable deposition techniques. Suitable wetting layer materials may include, but are not limited to, carbides, carbon materials, combinations thereof, and the like. Suitable carbide materials may include, but are not limited to, silicon carbides, boron carbides, combinations thereof, and the like. Suitable carbon materials may include but are not limited to, pyrolytic carbon, graphite flakes, graphite particles, graphite fibers, carbon nanotubes, carbon nanofibers, diamonds, combinations thereof, and the like.

Referring now to FIG. 2A, after completing exemplary step 500, a slurry containing a solvent and at least one uncoated sacrificial particle may be infiltrated into and throughout at least one pore or porous network or both the pores and porous network of the partially densified ceramic matrix composite at an exemplary step 600a. In doing so, the pores and/or porous network may be filled substantially and/or entirely with the uncoated sacrificial particles. In at least one embodiment, the slurry also may include various additives including, but not limited to, binders, wetting agents, carbon sources, various particles (e.g., carbons, metals, carbides, nitrides, borides, oxides, combinations thereof, and the like), pH adjusters, dispersants and ice crystal modifiers, combinations thereof, and the like. The aforementioned additives may be present in various concentrations, e.g., by weight percent, volume percent, and the like; based on the slurry, and in various ratios with respect to each other, to optimize the efficiency of each slurry infiltration performed. For example, the binders may be selected and present in an amount suitable for impacting a viscosity of the slurry and ensuring uniform distribution of the particles.

Any slurry infiltration technique may be utilized when carrying out the exemplary process disclosed herein. Suitable slurry infiltration techniques may include, but are not limited to, submersion, spraying, dip coating, transfer molding, painting; individually, and combinations thereof, and the like. For example, the partially densified ceramic matrix composite may be disposed in a vacuum chamber and a vacuum applied. Next, a slurry may be introduced into the vacuum chamber. Due to the vacuum applied within the chamber, the slurry may be pulled into the pores and/or porous network of the partially densified ceramic matrix composite. In at least one other embodiment, a combination of methods may be utilized to deliver the slurry to the partially densified ceramic matrix composite in alternative steps or to different locations of the partially densified ceramic matrix composite.

Next, at an exemplary step 600b, the uncoated sacrificial particles filled within the pores and/or porous network of the slurry infiltrated partially densified ceramic matrix composite may be freeze dried. In carrying out freeze drying, the slurry infiltrated partially densified ceramic matrix composite may be placed in a pre-cooled freezer. To achieve the desired extent of freezing, freezing parameters may be monitored and modified as necessary. In at least one embodiment, the freezing parameters may include, but are not limited to, a temperature range of approximately -197°C to approximately -20°C; a pressure range of greater than 0 to approximately 100 atm (0 to 10.1 MPa); a freezing rate of approximately 200°C/sec to approximately 1°C/hr.; solidification direction, combinations thereof, and the like, to achieve the desired size of the ice crystals within the slurry infiltrated partially densified ceramic matrix composite. In at least one alternative embodiment, a super critical drying technique, rather than a freeze-drying technique, may be used to eliminate the aforementioned surface tension related to uncoated sacrificial particle clustering issues. However, super critical drying techniques are more complex and expensive when compared to freeze drying techniques.

Once achieving the desired size of the ice crystals, a vacuum may be applied to begin sublimating the frozen slurry infiltrant within the partially densified ceramic matrix composite. The solidified solvent undergoes sublimation and may transition directly from a solid phase to a vapor phase without passing through a liquid phase. Sublimation may leave the remaining uncoated sacrificial particles uniformly spaced, as the absence of liquid solvent may eliminate surface tension, which may otherwise cause particle agglomeration. Consequently, sublimation, rather than melting, must be achieved to prevent clustering and porosity within the partially densified ceramic matrix composite.

After sublimation occurs, the sublimated frozen partially densified ceramic matrix composite may be placed in a drying oven. Any drying oven equipped with a moisture free container for holding the sublimated frozen partially densified ceramic matrix composite may be considered suitable for use herein. The drying oven may be operated at a temperature sufficient to drive off any residual moisture within the partially densified ceramic matrix composite. In at least one embodiment, a sufficient temperature range may be approximately 30°C to approximately 200°C. Once drying is completed, the uncoated sacrificial particles may be uniformly distributed within and throughout the pores and/or porous network between the fibers and/or fiber tows of the partially densified ceramic matrix composite. At this point in the exemplary process, the partially densified ceramic matrix composite having the uncoated sacrificial particles uniformly distributed therein may proceed to exemplary step 700 of FIG. 1 as discussed further below.

Referring now to FIG. 2B, at least one uncoated sacrificial particle may be provided at an exemplary step 600c and the aforementioned reaction control and wetting coating layer(s) may be deposited thereupon at an exemplary step 600d according to the suitable deposition processes discussed above to form at least one coated sacrificial particle as illustrated in FIG. 3. Next, at an exemplary step 600e, a slurry containing the coated sacrificial particles may be prepared as discussed above and infiltrated within and throughout substantially and/or entirely the pores and/or porous network of the partially densified ceramic matrix composite also as discussed above. As a result, only the sacrificial particles are coated, rather than both the sacrificial particles and the fibers and/or fiber tows of the partially densified ceramic matrix composite. Next, at an exemplary step 600f, the slurry infiltrated partially densified ceramic matrix may be freeze-dried. In carrying out the freeze drying technique, the slurry infiltrated partially densified ceramic matrix composite may be freeze-dried according to the process described above. Then, the frozen partially densified ceramic matrix composite having the coated sacrificial particles uniformly distributed therein may be sublimated according to the process described above. At this point in the exemplary process, the sublimated partially densified ceramic matrix composite have the coated sacrificial particles uniformly distributed within a matrix precursor 90. The matrix precursor 90 may include, but is not limited to, silicides including, but not limited to, hafnium silicide, zirconium silicide, titanium silicide, tantalum silicide, iridium silicide, molybdenum silicide, tungsten silicide, boron silicide, niobium silicide, ytterbium silicide, vanadium silicide, scandium silicide, yttrium silicide; their eutectic phases; individually, and in, combinations thereof, and the like. The exemplary process then may proceed to an exemplary step 800 of FIG. 1 as discussed below.

Referring now to FIG. 2C, as an alternative to the exemplary steps 600a-600b of FIG. 2A and exemplary steps 600c-600f of FIG. 2B, a commercially available coated sacrificial particle already having the aforementioned reaction control and wetting coating layer(s) may be provided at an exemplary step 600g. Next, at an exemplary step 600h, a slurry containing these commercially available coated sacrificial particles may be prepared as discussed above and infiltrated within and throughout substantially and/or entirely the pores and/or porous network of the partially densified ceramic matrix composite also as discussed above. As a result, only the sacrificial particles are coated, rather than both the sacrificial particles and the fibers and/or fiber tows of the partially densified ceramic matrix composite. Next, at an exemplary step 600i, the slurry infiltrated partially densified ceramic matrix may be freeze-dried. In carrying out the freeze drying technique, the slurry infiltrated partially densified ceramic matrix composite may be freeze-dried according to the process described above. Then, the frozen partially densified ceramic matrix composite having the coated sacrificial particles uniformly distributed therein may be sublimated according to the process described above. At this point in the exemplary process, the sublimated partially densified ceramic matrix composite having the coated sacrificial particles uniformly distributed therein may proceed to exemplary step 800 of FIG. 1 as discussed below.

When following exemplary step 600b of FIG. 2A, at an exemplary step 700 of FIG. 1, the aforementioned reaction control layer 70 and wetting layer 80 may be deposited on the uncoated sacrificial particles and fibers and/or fiber tows of the partially densified ceramic matrix composite according to the suitable deposition techniques discussed above. The resultant coated sacrificial particles and fibers and/or fiber tows of the partially densified ceramic matrix composite may appear as illustrated in FIG. 3. At this point in the exemplary process, the partially densified ceramic matrix composite having the coated sacrificial particles uniformly distributed therein may proceed to exemplary step 800 of FIG. 1 as discussed below.

Next, at an exemplary step 800 of FIG. 1, the partially densified ceramic matrix composite containing the coated sacrificial particles within the pores and/or porous network may be melt-infiltrated with at least one molten infiltrant to fabricate a melt-infiltrated ceramic matrix composite. In at least one embodiment, the molten infiltrant may include, but is not limited to metals, metalloids, metal alloys, metalloid alloys, glasses, combinations thereof, and the like. In particular, exemplary molten infiltrant materials may include, but are not limited to, silicon, hafnium silicide, zirconium silicide, titanium silicide, tantalum silicide, iridium silicide, molybdenum silicide, tungsten silicide, boron silicide, niobium silicide, ytterbium silicide, vanadium silicide, scandium silicide, yttrium silicide, alumino-silicate glass, combinations thereof, and the like. Any suitable melt-infiltrating technique may be utilized when infiltrating the molten infiltrant as disclosed herein.

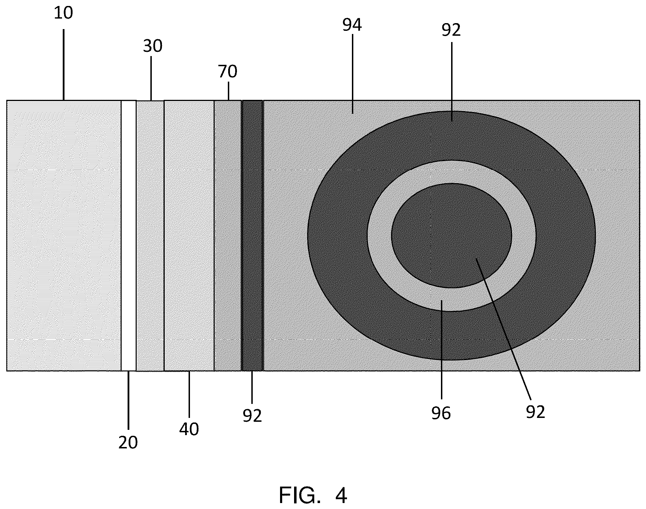

Referring now to FIG. 4, when carrying out the process, the molten infiltrant material may react with the optional wetting layer 80, if present, of the coated sacrificial particle or of both the coated sacrificial particle and the partially densified ceramic matrix composite, until the wetting layer 80 is consumed. Once the wetting layer 80 is consumed, the molten infiltrate material may diffuse through the reaction control material coating 70 of the coated sacrificial particle. Once the molten infiltrate material diffuses through the reaction control material coating 70, the molten infiltrate material may react with the material of the core 60 of the coated sacrificial particle and produce a reaction product.

During that reaction, the reaction constituents may convert into a desired phase of a matrix comprising the reaction product. In at least one embodiment, the core particle 60 may be diamond, which after reacting with the melt-infiltrant, may convert to a reaction-formed silicon carbide. Due to the carbon density of diamond, the reaction-formed silicon carbide occupies a larger volume than the original diamond particle of the coated particle. That is, the reaction-formed silicon carbide may occupy a volume of at least approximately 1 times greater, of at least approximately 2 times greater, of at least approximately 3 times greater, and even of at least approximately 3.5 times greater than the volume of the original diamond particle. This difference in volume is due to the carbon of the diamond particle consuming the silicon present in the molten infiltrant material and forming the reaction-formed silicon carbide. In turn, the molten infiltrant may convert to a high melting point silicide matrix 94 contained within the pores, porous network, or both the pores and porous network of the partially densified ceramic matrix composite. In addition to the high melting point silicide matrix 94, the reaction product also may comprise a reaction-modified coated particle disposed therein and throughout the melt-infiltrated ceramic matrix composite. In at least one embodiment, through the aforementioned reaction(s), the coated particle constituents 60, 70, 80 may transform into a reaction-modified coated particle containing a reaction-formed silicon carbide core 92 having at least one reaction control material 96 disposed thereupon as a coating and at least one reaction-formed silicon carbide disposed as a coating on the reaction control material coating 96 and opposite the reaction-formed silicon carbide core 92. In at least one embodiment, again through the aforementioned reaction(s), the optional wetting layer material 80 also may transform into a reaction-formed silicon carbide coating 92 disposed on the reaction control material coating 70 of the resultant melt-infiltrated ceramic matrix composite.

At an exemplary step 900 of FIG. 1, the resultant melt-infiltrated CMC optionally may be heat-treated to react the resultant reaction-modified coated particles with the melt infiltrant as well as at least one or more metals, metal alloys, metalloids, metalloid alloys, glasses, aforementioned various particles, fiber protection coatings, combinations thereof, and the like, therein. Melt infiltration may be carried out at low temperatures and dwell times relative to heat treatment temperatures and dwell times in order to minimize the reaction of the molten materials and the sacrificial materials. If the aforementioned reaction is not minimized, unwanted material segregation or infiltration "choking off" may result. Suitable melt infiltration temperature range may be approximately 1,100°C to approximately 1,600°C. In correlation with the melt infiltration temperature range, suitable dwell time range may be approximately 1 minute to approximately 5 hours. In addition, suitable heat treatment temperature range may be approximately 1,400°C to approximately 2,000°C. In correlation with the heat treatment temperature range, suitable dwell times may be approximately 30 minutes to approximately 48 hours. The aforementioned heat treatment temperatures and hold times may be correlated and designed to achieve the desired amount of reaction between the molten material(s) and the sacrificial material(s). In most embodiments, the desired amount of reaction may be greater than approximately 95% of the total amount of sacrificial material(s) initially present.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope of the present disclosure.

## Claims

1. A process for fabricating a melt-infiltrated ceramic matrix composite, comprising the steps of:
fabricating a ceramic fiber preform comprising at least one fiber (10), at least one fiber tow (10), or at least one fiber (10) and fiber tow (10);
optionally depositing at least one interface coating (20) on the at least one fiber (10), the at least one fiber tow (10), or the at least one fiber (10) and fiber tow (10);
depositing at least one structural support material coating (30) on the at least one fiber (10), the at least one fiber tow (10), or the at least one fiber (10) and fiber tow (10) to form a partially densified ceramic matrix composite comprising at least one pore, at least one porous network or at least one pore and porous network;
depositing at least one fiber protection material coating (40) on the at least one fiber (10), the at least one fiber tow (10), or the at least one fiber (10) and fiber tow (10);
infiltrating a slurry composition comprising at least one sacrificial particle (60; 92) into the at least one pore, the at least one porous network or both the at least one pore and the porous network;
depositing at least one reaction control material coating (70; 96) on the at least one fiber (10), the at least one fiber tow (10), or the at least one fiber (10) and fiber tow (10) and at least one sacrificial particle (60; 92) of the partially densified ceramic matrix composite;
optionally depositing at least one wetting layer coating (80) on the at least one reaction control material coating (70; 96) of the partially densified ceramic matrix composite, the at least one reaction control material coating (70; 96) of the at least one sacrificial particle (60; 92), or both the at least one reaction control material coating (70; 96) of the partially densified ceramic matrix composite and the at least one reaction control material coating (70; 96) of the at least one sacrificial particle (60; 92);
melt-infiltrating at least one molten infiltrant into the partially densified ceramic matrix composite to form a melt-infiltrated ceramic matrix composite; and
optionally heat treating the melt-infiltrated ceramic matrix composite,
wherein the at least one sacrificial particle (60; 92) comprises a core (60; 92), the at least one reaction control material coating (70; 96) disposed adjacent the core (60; 92), and the optional at least one wetting layer coating (80) disposed adjacent the at least one reaction control material coating (70; 96) and opposite the core (60; 92).

2. The process of claim 1, wherein melt-infiltrating further comprises the following steps:
reacting the at least one molten infiltrant with the optional at least one wetting layer coating (80) of the at least one sacrificial particle (60; 92), the optional at least one wetting layer coating (80) of the partially densified ceramic matrix composite, or both the optional at least one wetting layer coating (80) of the at least one sacrificial particle (60; 92) and the optional at least one wetting layer coating (80) of the partially densified ceramic matrix composite;
diffusing the at least one molten infiltrant through the at least one reaction control material coating (70; 96) and reacting with the at least one sacrificial particle (60; 92); and
reacting the at least one molten infiltrant with the at least one sacrificial particle (60; 92) until a matrix (94) comprising a reaction formed silicon carbide and a high melting point silicide is produced.

3. The process of claim 2, wherein the reaction formed silicon carbide comprises a particle having a core (92) with an exterior surface, at least one reaction control material coating (96) disposed adjacent the exterior surface, and a reaction formed silicon carbide coating (92) disposed adjacent the at least one reaction control material coating (96) and opposite the exterior surface.

4. The process of any preceding claim, wherein the reaction control materials (70; 96) or the fiber protection materials (40) or both the reaction control materials (70; 96) and the fiber protection materials (40) comprise one or more of the following:
carbides, optionally comprising one or more of silicon carbides, boron carbides, zirconium carbides, hafnium carbides, tantalum carbides, niobium carbides, titanium carbides, molybdenum carbides, boron carbides, tungsten carbides, vanadium carbides, chromium carbides, ytterbium carbides, yttrium carbides, and combinations thereof;
carbon materials;
nitrides;
borides; and
combinations thereof.

5. The process of claim 4, wherein the carbon materials comprise one or more of the following: pyrolytic carbon, graphite flakes, graphite particles, graphite fibers, carbon nanotubes, carbon nanofibers, diamonds, and combinations thereof.

6. The process of claim 4, wherein the nitrides comprise one or more of the following: silicon nitrides, titanium nitrides, boron nitrides, zirconium nitrides, hafnium nitrides, niobium nitrides, tantalum nitrides, vanadium nitrides, ytterbium nitrides, yttrium nitrides, and combinations thereof.

7. The process of claim 4, wherein the borides comprise one or more of the following: silicon borides, titanium borides, borides, zirconium borides, hafnium borides, niobium borides, tantalum borides, vanadium borides, ytterbium borides, yttrium borides, and combinations thereof.

8. The process of any preceding claim, wherein the wetting layer coating (80) comprises one or more of the following:
carbides, optionally comprising one or more of silicon carbides, boron carbides, and combinations thereof;
carbon materials, optionally comprising one or more of pyrolytic carbon, graphite flakes, graphite particles, graphite fibers, carbon nanotubes, carbon nanofibers, diamonds, and combinations thereof; and
combinations thereof.

9. The process of any preceding claim, wherein the at least one sacrificial material (60; 92) comprises one or more of the following materials: carbon source materials, nitride source materials, boride source materials, oxide source materials, oxide phase precursor materials, metal source materials and metalloid source materials.

10. The process of any preceding claim, wherein depositing comprises one or more of the following techniques: slurry infiltration and chemical vapor infiltration.

11. The process of any preceding claim, wherein the interface coating (20), the structural support material (30) or both the interface coating (20) and the structural support material (30) comprises one or more of the following materials: carbides, carbon materials, nitrides, borides, and combinations thereof.

12. The process of any preceding claim, wherein melt-infiltrating further comprises melt-infiltrating one or more of the following molten infiltrants: metals, metalloids, metal alloys, metalloid alloys, glasses, and combinations thereof.

13. The process of any preceding claim, wherein the at least one molten infiltrants comprise one or more of the following: silicon, hafnium silicide, zirconium silicide, titanium silicide, tantalum silicide, iridium silicide, molybdenum silicide, tungsten silicide, boron silicide, niobium silicide, ytterbium silicide, vanadium silicide, scandium silicide, yttrium silicide, and combinations thereof.

14. A melt-infiltrated ceramic matrix composite fabricated according to the process of any preceding claim.

15. A process for fabricating a melt-infiltrated ceramic matrix composite, comprising the steps of:
fabricating a ceramic fiber preform comprising at least one fiber (10), at least one fiber tow (10), or at least one fiber (10) and fiber tow (10);
optionally depositing at least one interface coating (20) on the at least one fiber (10), the at least one fiber tow (10), or the at least one fiber (10) and fiber tow (10);
depositing at least one structural support material coating (30) on the at least one fiber (10), the at least one fiber tow (10), or the at least one fiber (10) and fiber tow (10) to form a partially densified ceramic matrix composite comprising at least one pore, at least one porous network or both the at least one pore and the porous network;
depositing at least one fiber protection material coating (40) on the at least one fiber (10), the at least one fiber tow (10), or the at least one fiber (10) and fiber tow (10);
infiltrating a slurry composition comprising at least one coated sacrificial particle (60; 92) into the at least one pore, the at least one porous network or the at least one pore and porous network;
melt-infiltrating at least one molten infiltrant into the partially densified ceramic matrix composite to form a melt-infiltrated ceramic matrix composite; and
optionally heat treating the melt-infiltrated ceramic matrix composite
optionally, wherein the process further comprises:
prior to infiltrating the slurry composition, the steps of:
providing at least one sacrificial particle (60; 92);
depositing at least one reaction control material coating (70; 96) on the at least one sacrificial particle (60; 92);
optionally depositing at least one wetting layer (80) on the at least one reaction control material coating (70; 96) of the at least one sacrificial particle (60; 92) to form the at least one coated sacrificial particle (60; 92); and
adding the at least one coated sacrificial particle (60; 92) to a solvent of a slurry to form the slurry composition; and/or
prior to infiltrating the slurry composition, providing at least one coated sacrificial particle (60; 92) comprising a core (60; 92), the at least one reaction control material coating (70; 96) disposed adjacent the core (60; 92), and the optional at least one wetting layer (80) disposed adjacent the at least one reaction control material coating (70; 96) and opposite the core (60; 92).
